# EUROPÄISCHE PATENTSCHRIFT

(11) **EP 2 646 581 B1**
(45) Veröffentlichungstag und Bekanntmachung des Hinweises auf die Patenterteilung: **31.01.2018**
(21) Anmeldenummer: 11845915.5
(22) Anmeldetag: 01.12.2011
(51) Int. Cl.: C14C 3/22, C08F 220/18, C08F 220/02, C14C 3/10, C14C 3/18, C14C 3/06, C14C 9/00, C14C 3/28, C08L 83/06, C08L 23/22, C08G 77/14

(54) **VERFAHREN ZUR HERSTELLUNG VON LEDER UND DAFÜR GEEIGNETE WÄSSRIGE FORMULIERUNGEN**
PROCESS FOR PRODUCING LEATHER AND AQUEOUS FORMULATIONS SUITED THEREFOR
PROCÉDÉ DE PRODUCTION DE CUIR ET FORMULATIONS AQUEUSES APPROPRIÉES À CET EFFET

(30) Priorität: 02.12.2010 EP 10193550
(43) Veröffentlichungstag der Anmeldung: 09.10.2013
(73) Patentinhaber: BASF SE, 67056 Ludwigshafen am Rhein (DE)
(72) Erfinder: BOHRES, Edward, 67067 Ludwigshafen (DE); DANISCH, Peter, 67065 Ludwigshafen (DE)
(74) Vertreter: BASF IP Association
(86) Internationale Anmeldenummer: PCT/IB2011/055400
(87) Internationale Veröffentlichungsnummer: WO 2012/073210

(56) Entgegenhaltungen:
- EP-A1- 1 087 021
- EP-A1- 1 335 029
- WO-A1-2005/031007
- WO-A1-2009/030697
- WO-A1-2009/030697
- CN-A- 1 109 509
- CN-A- 1 788 093

## Beschreibung

Die vorliegende Erfindung betrifft ein Verfahren zur Herstellung von Leder, das dadurch gekennzeichnet ist, dass man Halbzeuge, Crust-Leder oder Blößen behandelt mit mindestens einer wässrigen Flotte, enthaltend
(A) mindestens ein amphiphiles organisches Copolymer,
(B) mindestens eine Silikonverbindung, die mindestens eine Carbonsäuregruppe oder mindestens eine Carbonsäureanhydridgruppe pro Molekül aufweist,
(C) mindestens eine oberflächenaktive Verbindung, gewählt aus Emulgatoren, die mindestens ein P-Atom pro Molekül aufweisen,
(D) mindestens eine oberflächenaktive Verbindung, gewählt aus N-acylierten Aminosäuren,
(E) mindestens eine oberflächenaktive Verbindung, enthaltend mindestens einen C₁₀-C₃₀-Alkylrest, unverzweigt oder verzeigt, oder mindestens einen Polyisobutenrest, und mindestens eine ionische oder in wässrigem Milieu ionisierbare Gruppe, und die verschieden ist von amphiphilem Copolymer (A) und von oberflächenaktiver Verbindung (C),
und die frei ist von Wachsen und Ölen.

Weiterhin betrifft die vorliegende Erfindung erfindungsgemäß hergestellte Leder. Weiterhin betrifft die vorliegende Erfindung wässrige Formulierungen, die für die Durchführung des erfindungsgemäßen Verfahrens geeignet sind.

Zur Herstellung von Leder können während der Vor-, Haupt- und Nachgerbung Polymere eingesetzt werden. Die Polymeren können dabei unterschiedliche Funktionen erfüllen. So können sie beispielsweise gerbende, nachgerbende, hydrophobierende, fettende oder dispergierende Wirkung zeigen. Die Wahl der Polymeren kann die Eigenschaften des Lederendprodukts beeinflussen. Für die Wahl der Polymeren werden in der Literatur unterschiedliche Vorschläge gemacht.

In EP 1 087 021 wird die Verwendung von Copolymeren beschrieben, die aus einer hydrophilen Monomer-Komponente wie beispielsweise Acrylsäure, Methacrylsäure, Acrylamid, Methacrylamid oder Maleinsäureanhydrid und einer hydrophoben Monomer-Komponente wie beispielsweise C₈-C₂₂-Alkylacrylat oder C₈-C₂₂-Alkylmethacrylat hergestellt sind und die neutralisiert sind. Die Copolymere werden als Komponente in Polysiloxan-haltigen Lederbehandlungsmitteln eingesetzt. Man beobachtet jedoch, dass mit den in EP 1 087 021 berichteten Lederbehandlungsmitteln hergestellte Leder in einigen Fällen diffusionsbedingte Inhomogenitäten in der Fettverteilung und dadurch eine unruhige Färbung aufweisen, sie können fleckig aussehen. Außerdem weisen einige der nach EP 1 087 021 hergestellten Leder eine Tendenz zur Losnarbigkeit bzw. Doppelhäutigkeit auf.

Aus WO 2009/030697 sind Formulierungen bekannt, die bestimmte Copolymere, Silikonverbindungen und Emulgator sowie vorzugsweise Fetten oder Öle enthalten können. Sie sind geeignet, um Leder mit sehr guten Eigenschaften herzustellen.

Es hat sich jedoch gezeigt, dass bei der Bearbeitung von Halbzeugen, Crust-Leder oder Blößen in hartem oder sehr hartem Wasser, beispielsweise bei 20° dH oder mehr, beispielsweise 60 °dH, oder bei der Verarbeitung von nur unvollständig entkälkten Blößen, zahlreiche Färbungs- und Fettungsprobleme auftauchen können. Neben einer sehr unegalen Färbung ist hier insbesondere ein Pullup-ähnlicher Effekt zu nennen. Man beobachtet, dass in sehr hartem Wasser gegerbte Leder beim wiederholten Biegen an der Biegestelle schnell heller werden und sich nur schlecht zurichten lassen.

Es bestand daher die Aufgabe, ein Verfahren zur Herstellung von Leder bereit zu stellen, durch das Leder erhältlich sind, die auch bei der Herstellung in hartem Wasser oder aus unvollständig entkälkten Blößen die vorstehend genannten Nachteile nicht aufweisen. Es bestand weiterhin die Aufgabe, Leder bereit zu stellen, die die vorstehend genannten Nachteile nicht aufweisen, und es bestand die Aufgabe, Formulierungen bereit zu stellen, die mit denen Leder herstellbar sind, die trotz Verarbeitung in hartem Wasser oder unter Verwendung von unvollständig entkälkten Blößen nur geringe Pullup-ähnliche Effekte zeigen.

Dementsprechend wurde das eingangs definierte Verfahren gefunden, kurz auch erfindungsgemäßes Verfahren genannt.

Zur Durchführung des erfindungsgemäßen Verfahrens geht man üblicherweise von Halbzeugen, Crust-Leder oder Blößen, insbesondere von Pickelblößen aus. Dabei versteht man unter Halbzeugen bereits gegerbte, aber nicht nachgegerbte und nicht gefettete Tierhäute. Beispielsweise kann es sich bei Halbzeugen um sogenanntes wet white oder wet blue handeln. Bei Crust-Leder kann es sich um mit Chrom gegerbtes, um vegetabil oder auf andere Weise chromfrei gegerbtes und mit Chrom, vegetabil oder auf andere Weise chromfrei nachgegerbtes sowie getrocknetes Leder handeln.

Halbzeuge, Crust-Leder und Blößen können von beliebigen Tieren stammen, beispielsweise von Rindern, Schweinen, Ziegen, Schafen, Kängurus, Wildtieren, insbesondere Hirschen, von Fischen oder Vögeln, insbesondere von Straußen. Dabei ist es für das erfindungsgemäße Verfahren nicht wesentlich, ob die Tiere beispielsweise durch Schlachten getötet oder waidmännisch erlegt wurden oder aber an natürlichen Ursachen verendet sind. Zu den konventionellen Methoden der Vorbehandlung gehören beispielsweise das Äschern, Entkälken, Beizen, Pickeln und gegebenenfalls Gerben sowie mechanische Arbeitsschritte, beispielsweise das Entfleischen der Häute.

Im Rahmen der vorliegenden Erfindung kann man von unvollständig entkälkten Blößen oder von durchentkälkten Blößen ausgehen, beispielsweise von solchen, die sich - wenn mit Phenolphthalein-Tinktur beträufelt -violettrot färben. Sollte die Blöße über den Querschnitt farblos bleiben, geht man hingegen davon aus, dass man durchentkälte Blöße vorliegen hat.

Erfindungsgemäß behandelt man Halbzeuge, Crust-Leder oder Blößen mit mindestens einer wässrigen Flotte, enthaltend
(A) mindestens ein amphiphiles organisches Copolymer,
(B) mindestens eine Silikonverbindung, die mindestens eine Carbonsäuregruppe oder mindestens eine Carbonsäureanhydridgruppe pro Molekül aufweist,
(C) mindestens eine oberflächenaktive Verbindung, gewählt aus Emulgatoren, die mindestens ein P-Atom pro Molekül aufweisen,
(D) mindestens eine oberflächenaktive Verbindung, gewählt aus N-acylierten Aminosäuren,
(E) mindestens eine oberflächenaktive Verbindung, enthaltend mindestens einen C₁₀-C₃₀-Alkylrest, unverzweigt oder verzeigt, oder mindestens einen Polyisobutenrest, und mindestens eine ionische oder in wässrigem Milieu ionisierbare Gruppe, und die verschieden ist von amphiphilem Copolymer (A) und von oberflächenaktiver Verbindung (C), und die frei ist von Wachsen und Ölen.

Unter "frei von Wachsen und Ölen" wird dabei im Zusammenhang mit der vorliegenden Erfindung verstanden, dass die im erfindungsgemäßen Verfahren weniger als 0,5 Gew.-%, bezogen auf gesamte eingesetzte wässrige Flotte, an natürlichen oder synthetischen Wachsen bzw. Ölen enthält.

Dabei werden unter Ölen bei Zimmertemperatur flüssige wasserunlösliche Substanzen verstanden, beispielsweise natürliche Öle, etherische Öle und synthetische Öle.

Beispiele für natürliche Öle sind bei Zimmertemperatur flüssige Triglyceride, beispielsweise Fischöl, Rinderklauenöl, Olivenöl, Baumwollsamenöl, Rizinusöl, Sonnenblumenöl und Erdnussöl.

Als Beispiele für synthetische Öle seien Weißöl, Paraffinöl, Mineralöle, synthetische Öle, funktionalisierte Paraffine wie beispielsweise chlorierte oder sulfochlorierte Paraffine genannt.

Als Beispiele für natürliche Wachse seien bei Zimmertemperatur feste native Triglyceride genannt wie beispielsweise Lanolin, Bienenwachs, Schellackwachs.

Unter synthetischen Wachsen seien im Rahmen der vorliegenden Erfindung hydrophobe synthetische Kohlenwasserstoffe verstanden, die bei Zimmertemperatur fest sind, bei höherer Temperatur, beispielsweise im Bereich von 40 bis 150°C, unzersetzt schmelzen und in der Schmelze schon bei einer Temperatur von wenigen °C oberhalb des Schmelzpunkts eine verhältnismäßig niedrige Viskosität aufweisen, beispielsweise eine kinematische Schmelzeviskosität v (ny) im Bereich von 100 bis 2.000 mm²/s aufweisen, gemessen bei 100°C.

Insbesondere handelt es sich bei synthetischen Wachsen um solche Kohlenwasserstoffe, die bei Zimmertemperatur fest sind, bei 40° aber schmelzen und
Unter hydrophob wird dabei im Rahmen der vorliegenden Erfindung beispielsweise verstanden, dass sich hydrophobe Verbindungen zu weniger als 0,1 g/l in Wasser lösen, insbesondere in Mangen von 0,1 bis 1 µg/l, gemessen bei Zimmertemperatur. Feste hydrophobe Verbindungen im Rahmen der vorliegenden Erfindung weisen mit Wasser bei Zimmertemperatur vorzugsweise einen Kontaktwinkel von mindestens 90° auf, wobei die Oberfläche der betreffenden festen hydrophoben Oberfläche glatt ist.

Zur Durchführung des erfindungsgemäßen Verfahrens behandelt man Halbzeuge, Crust-Leder oder Blößen mit einer wässrigen Flotte. Geeignete Flottenlängen sind beispielsweise 1 bis 250%, bevorzugt mindestens 50%. Wässrige Flotten im Sinne der vorliegenden Erfindung können insgesamt bis zu 40 Vol.-%, bevorzugt insgesamt bis zu 20 Vol.-% ein oder mehrere organische Lösungsmittel, beispielsweise Methanol, Ethanol, Isopropanol oder Ethylenglykol, enthalten. In einer besonders bevorzugten Variante der vorliegenden Erfindung sind wässrige Flotten frei von organischen Lösungsmitteln.

Zur Durchführung des erfindungsgemäßen Verfahrens behandelt man mit mindestens einer wässrigen Flotte, beispielsweise mit zwei oder drei separaten Flotten, die nachfolgend beschriebene Komponenten (A) bis (E) enthalten, bevorzugt mit nur einer wässrigen Flotte, die nachfolgend beschriebene Komponenten (A) bis (E) enthält.

Als Komponente (A) enthält im erfindungsgemäßen Verfahren eingesetzte wässrige Flotte (A) mindestens ein amphiphiles organisches Copolymer, im Rahmen der vorliegenden Erfindung auch Copolymer (A) bezeichnet. Copolymer (A) kann ein Blockcopolymer, ein Pfropfcopolymer oder vorzugsweise ein statistisches Copolymer sein.

Copolymer (A) enthält hydrophile und hydrophobe Bausteine, vorzugsweise durch Einpolymerisieren von hydrophilen und hydrophoben Comonomeren. Geeignete hydrophile Comonomere sind beispielsweise ethylenisch ungesättigte Carbonsäuren, ethylenisch ungesättigte Dicarbonsäuren, Anhydride von ethylenisch ungesättigten Mono- oder Dicarbonsäuren, und ethylenisch ungesättigte Sulfonsäuren.

In einer Ausführungsform der vorliegenden Erfindung enthält Copolymer (A) weiterhin mindestens ein, bevorzugt mindestens zwei verschiedene hydrophile Comonomere eingebaut. Geeignete hydrophobe Comonomere sind beispielsweise Aromaten mit mindestens einer ethylenischen Doppelbindung, beispielsweise para-Methylstyrol, α-Methylstyrol und insbesondere Styrol, α-Olefine im engeren Sinn, beispielsweise Ethylen, Propylen, 1-Buten, 1-Penten, 1-Hexen, 1-Okten, 1-Decen, 1-Dodecen, 1-Tetradecen, 1-Hexadecen, 1-Octadecen, 1-Eicosen, und weiterhin C₄-C₂₀-Alkylester von (Meth)acrylsäure.

In einer Ausführungsform der vorliegenden Erfindung wählt man Copolymer (A) aus solchen vorzugsweise statistischen Copolymeren, die erhältlich sind durch Copolymerisation von
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid, kurz auch Comonomer (a) genannt,
(b) mindestens einem (Meth)acrylat eines α-verzweigten C₃-C₁₀-Alkanols, kurz auch Comonomer (b) genannt,
(c) mindestens einem (Meth)acrylat eines primären C₄-C₂₀-Alkanols, kurz auch Comonomer (c) genannt,.

Beispiele für ethylenisch ungesättigte C₃-C₁₀-Carbonsäuren (a) sind vorzugsweise α,β-ungesättigte Carbonsäuren wie beispielsweise (E)- oder (Z)-Crotonsäure und insbesondere (Meth)acrylsäure.

Beispiele für ethylenisch ungesättigte C₄-C₁₀-Dicarbonsäuren (a) sind Maleinsäure, Fumarsäure, Itaconsäure, Citraconsäure, Metaconsäure, Methylenmalonsäure, bevorzugt Itaconsäure, Fumarsäure und Maleinsäure und ganz besonders bevorzugt
Maleinsäure.

Beispiele für Anhydride (a) sind Maleinsäureanhydrid, Itaconsäureanhydrid, Citraconsäureanhydrid, Methylenmalonsäureanydrid, bevorzugt Itaconsäureanhydrid und Maleinsäureanhydrid und ganz besonders bevorzugt Maleinsäureanhydrid.

In einer Ausführungsform der vorliegenden Erfindung kann Copolymer (A) zwei oder mehr verschiedene ethylenisch ungesättigte C₃-C₁₀-Carbonsäuren (a) oder zwei oder mehr verschiedene ethylenisch ungesättigte C₄-C₁₀-Dicarbonsäuren (a) oder zwei oder mehr verschiedene Anhydride (a) einpolymerisiert enthalten.

In einer Ausführungsform der vorliegenden Erfindung kann Copolymer (A) eine ethylenisch ungesättigte C₃-C₁₀-Carbonsäure (a) und eine ethylenisch ungesättigte C₄-C₁₀-Dicarbonsäure (a) oder ein Anhydrid (a) einpolymerisiert enthalten.

Vorzugsweise enthält Copolymer (A) jedoch nur eine ethylenisch ungesättigte C₃-C₁₀-Carbonsäure (a) oder eine ethylenisch ungesättigte C₄-C₁₀-Dicarbonsäure (a) oder ein Anhydrid (a) einpolymerisiert.

Copolymer (A) enthält weiterhin mindestens ein Comonomer (b) einpolymerisiert. Bei Comonomer (b) handelt es sich um ein (Meth)acrylat eines α-verzweigten C₃-C₁₀-Alkanols. Unter α-verzweigten C₃-C₁₀-Alkanolen werden im Rahmen der vorliegenden Erfindung sekundäre Alkanole mit 3 bis 10 C-Atomen und bevorzugt tertiäre Alkanole mit 4 bis 10 C-Atomen verstanden, die zyklisch oder vorzugsweise nichtzyklisch sein können. Der Begriff Alkanole schließt also Cycloalkanole mit ein. Beispiele für sekundäre Alkanole mit 3 bis 10 C-Atomen sind Isopropanol, sek.-Butanol, sek.-Pentanol (Pentan-2-ol), Pentan-3-ol, Cyclopentanol, Cyclohexanol, sek.-Hexanol (Hexan-2-ol), Hexan-3-ol, sek.-Heptanol (Heptan-2-ol), Heptan-3-ol, sek.-Dekanol und Dekan-3-ol. Bevorzugte Beispiele sind tert.-Butanol und tert.-Amylalkohol.

In einer Variante der vorliegenden Erfindung enthält Copolymer (A) zwei oder mehr verschiedene Comonomere (b) einpolymerisiert.

Bevorzugt ist es jedoch, wenn Copolymer (A) nur ein Comonomer (b) einpolymerisiert enthält.

Besonders bevorzugte Comonomere (b) sind tert.-Amyl(meth)acrylat, tert.-Butylacrylat und insbesondere tert.-Butylmethacrylat.

Copolymer (A) enthält weiterhin mindestens ein Comonomer (c) einpolymerisiert. Bei Comonomer (c) handelt es sich um ein (Meth)acrylat eines primären C₄-C₂₀-Alkanols, bevorzugt eines primären C₆-C₁₈-Alkanols. Bei primären C₄-C₂₀-Alkanolen handelt es sich im Rahmen der vorliegenden Erfindung um geradkettige oder vorzugsweise verzweigte primäre Alkohole, die eine primäre OH-Gruppe aufweisen. Beispiele für primäre C₄-C₂₀-Alkanole sind n-Butanol, n-Pentanol, n-Hexanol, n-Heptanol, n-Oktanol, n-Nonanol, n-Dekanol, n-Dodekanol, n-Tetradekanol, n-Hexadekanol, n-Oktadekanol und n-Eicosanol. Beispiele für verzweigte primäre C₄-C₂₀-Alkanole sind Isobutanol, Isopentanol, Isohexanol, Isooktanol, Isostearylalkohol und Isopalmitylalkohol. Beispiele für bevorzugte primäre C₆-C₁₈-Alkanole sind 2-Ethylhexylalkohol, 3-n-Propylheptylalkohol, 2-n-Propylheptanol, 3-Isopropylheptylalkohol, Isooktanol, Isostearylalkohol und Isopalmitylalkohol.

In einer Ausführungsform der vorliegenden Erfindung handelt sich bei mindestens einem Comonomer (c) um ein (Meth)acrylat eines primären β- oder γ- (gamma-) verzweigten C₄-C₂₀-Alkohols, ganz besonders bevorzugt sind 2-Ethylhexylalkohol, 2-n-Propylheptanol, 3-n-Propylheptylalkohol und 3-Isopropylheptylalkohol.

In einer Variante der vorliegenden Erfindung enthält Copolymer (A) zwei oder mehr verschiedene Comonomere (c) einpolymerisiert.

Bevorzugt ist es jedoch, wenn Copolymer (A) nur ein Comonomer (c) einpolymerisiert enthält.

In einer Ausführungsform der vorliegenden Erfindung ist Copolymer (A) erhältlich durch Copolymerisation von
(a) insgesamt 5 bis 30 Gew.-%, bevorzugt 10 bis 25 Gew.-% ethylenisch ungesättigter C₃-C₁₀-Carbonsäure oder ethylenisch ungesättigter C₄-C₁₀-Dicarbonsäure oder ihr Anhydrid,
(b) insgesamt 5 bis 30 Gew.-%, bevorzugt 10 bis 20 Gew.-% Methacrylat von α-verzweigtem C₃-C₁₀-Alkanol,
(c) insgesamt 40 bis 90 Gew.-%, bevorzugt 55 bis 80 Gew.-% Acrylat von primärem C₄-C₂₀-Alkanol.

Dabei sind Angaben in Gew.-% auf die Summe aus einpolymerisiertem Comonomer (b) und Comonomer (c) und ethylenisch ungesättigter C₃-C₁₀-Carbonsäure (a) bzw. ethylenisch ungesättigter C₄-C₁₀-Dicarbonsäure (a) bzw. Anhydrid (a) bezogen.

In einer Ausführungsform der vorliegenden Erfindung kann Copolymer (A) ein oder mehrere weitere Comonomere (d) einpolymerisiert enthalten. Beispiele für geeignete Comonomere (d) sind Vinylester von C₁-C₁₀-Carbonsäuren, bevorzugt sind Vinylformiat, Vinylpropionat und insbesondere Vinylacetat. Weitere Beispiele für geeignete Comonomere (d) sind Vinylaromaten wie beispielsweise α-Methylstyrol, para-Methylstyrol und insbesondere Styrol. Weitere Beispiele für geeignete Comonomere (d) sind C₆-C₃₀-α-Olefine, beispielsweise 1-Hexen, 1-Octen, 1-Decen, 1-n-C₁₆H₃₂, 1-n-C₁₈H₃₆, 1-Eicosen und 1-n-Docosanol.

In einer Ausführungsform der vorliegenden Erfindung enthält Copolymer (A) insgesamt bis zu 50 Gew.-%, bevorzugt 1 bis 30 Gew.-% weiteres Comonomer (d) einpolymerisiert, bezogen auf die Summe aus Comonomer (b) und Comonomer (c) und ethylenisch ungesättigter C₃-C₁₀-Carbonsäure (a) bzw. ethylenisch ungesättigter C₄-C₁₀-Dicarbonsäure (a) bzw. Anhydrid (a).

In einer bevorzugten Ausführungsform der vorliegenden Erfindung enthält Copolymer (A) kein Comonomer (d) einpolymerisiert.

In einer Ausführungsform der vorliegenden Erfindung weist Copolymer (A) bei Zimmertemperatur eine dynamische Viskosität im Bereich von 50 bis 4000 mPa·s, bevorzugt im Bereich von 75 bis 2500 mPa·s auf, bestimmt nach DIN EN ISO 2555 (Brookfield DV-E Viscometer, Spindel Nr. 3 des RV Spindelsatz, 50 upm).

In einer Ausführungsform der vorliegenden Erfindung liegt einpolymerisierte ethylenisch ungesättigte C₃-C₁₀-Carbonsäure (a) bzw. einpolymerisierte ethylenisch ungesättigte C₄-C₁₀-Dicarbonsäure (a) in zumindest partiell neutralisierter Form vor.

In einer Ausführungsform der vorliegenden Erfindung liegt einpolymerisiertes Anhydrid von ethylenisch ungesättigter C₄-C₁₀-Dicarbonsäure (a) in zumindest partiell hydrolysierter und gegebenenfalls zumindest partiell neutralisierter Form vor.

Im erfindungsgemäßen verfahren setzt man weiterhin
(B) mindestens eine Silikonverbindung ein, die mindestens eine Carbonsäuregruppe oder mindestens eine Carbonsäureanhydridgruppe pro Molekül aufweist, kurz auch Silikonverbindung (B) oder Komponente (B) genannt.

In einer Ausführungsform handelt es sich bei Silikonverbindung (B) um solche, die Strukturelemente der Formeln (II) und (III) und optional Strukturelemente (IV a) und/oder (IV b) aufweisen.

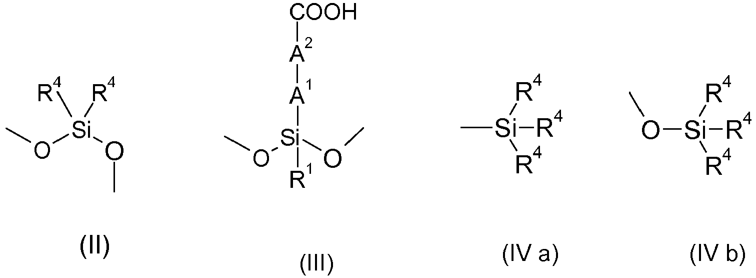

Die oben bezeichneten Strukturelemente sind jeweils so angeordnet, dass Si-O-Si-O-Ketten gebildet werden. Die Bildung von Si-Si-Gruppen ist theoretisch möglich, spielt aber in den meisten Fällen eine untergeordnete Rolle.

In den Formeln (II), (III), (IV a) und (IV b) sind die Variablen wie folgt definiert:
R⁴ ist gleich oder verschieden und unabhängig voneinander
Wasserstoff,
Hydroxyl,
C₁-C₄-Alkyl, wie Methyl, Ethyl, n-Propyl, iso-Propyl, n-Butyl, iso-Butyl, sec.-Butyl und tert.-Butyl; insbesondere Methyl;
C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
C₁-C₄-Alkoxy, wie Methoxy, Ethoxy, n-Propoxy, iso-Propoxy, n-Butoxy, iso-Butoxy, sec.-Butoxy, tert.-Butoxy;
Amino,
Mono-C₁-C₄-Alkylamino, beispielsweise -NHCH₃, -NHC₂H₅, -NH(CH₂)₂CH₃,
-NH(CH₂)₃CH₃, -NH-CH(CH₃)₂, NHC(CH₃)₃;
Di-C₁-C₄-Alkylamino, -N(CH₃)₂, -N(C₂H₅)₂, -N(CH₃)(C₂H₅), -N[(CH₂)₂CH₃]₂,
-N(CH₃)CH(CH₃)₂,
oder A¹-A²-COOH.

In einer bevorzugten Ausführungsform der vorliegenden Erfindung sind alle R⁴ gleich und jeweils Methyl.

In einer anderen bevorzugten Ausführungsform sind die Strukturelemente (II) jeweils gleich, wobei in (II) jeweils ein R⁴ gleich Methyl und das andere R⁴ Phenyl ist.

In einer Ausführungsform der vorliegenden Erfindung sind die Strukturelemente der Formel (IV a) ausgewählt aus den folgenden Gruppen: Si(CH₃)₃, Si(CH₃)₂C₆H₅, Si(CH₃)₂OH, Si(CH₃)C₆H₅OH.

In einer Ausführungsform der vorliegenden Erfindung sind in den Strukturelementen der Formel (IV a) bzw. (IV b) jeweils zwei R⁴ gleich und gewählt aus CH₃ und C₆H₅, und das dritte R⁴ ist A¹-A²-COOH.
A¹ bedeutet
eine direkte Bindung,
Sauerstoff
Aminogruppe der Formel -NR⁵-
Carbonylgruppe,
Amidogruppe der Formel -NR⁵-CO- oder -CO-NR⁵- oder
Estergruppe der Formel CO-O oder O-CO;
R⁵ ist gleich oder verschieden und unabhängig voneinander gewählt aus
Wasserstoff,
C₁-C₄-Alkyl, wie Methyl, Ethyl, n-Propyl, iso-Propyl, n-Butyl, iso-Butyl, sec.-Butyl und tert.-Butyl.

A² ist gleich oder verschieden und lineares oder verzweigtes C₅-C₂₅-Alkylen, unsubstituiert oder substituiert mit einem oder mehreren C₁-C₄-Alkyl oder Phenyl, beispielsweise -(CH₂)₅-, -(CH₂)₆-, -(CH₂)₇-, -(CH₂)₈-, -(CH₂)₉-, -(CH₂)₁₀-, -(CH₂)₁₁-, -(CH₂)₁₂-, -(CH₂)₁₃-, -(CH₂)₁₄-, -CH(CH₃)-CH₂-CH₂-CH₂-CH(CH₃)-,-C(CH₃)₂-CH₂-CH₂-CH₂-CH(CH₃)-; -CH(C₆H₅)-CH₂-CH₂-CH₂-CH(CH₃)-; vorzugsweise -(CH₂)₈-, -(CH₂)₉-, -(CH₂)₁₀-, -(CH₂)₁₁-, -(CH₂)₁₂-, wobei C₅-C₂₅-Alkylen durch 1 bis 8 nicht direkt miteinander verbundene O-Atome unterbrochen sein kann.

Silikonverbindung (B), welche die Strukturelemente der allgemeinen Formeln (II), (III) sowie optional (IV a) und/oder (IV b) enthält, kann linear aufgebaut sein oder cyclische oder verzweigte Struktur haben. Verzweigte Silikonverbindung (B), welche die Strukturelemente (II), (III) sowie optional (IV a) und/oder (IV b) enthält, enthält im Allgemeinen zusätzlich Strukturelemente beispielsweise der Formel (V a) oder (V b) 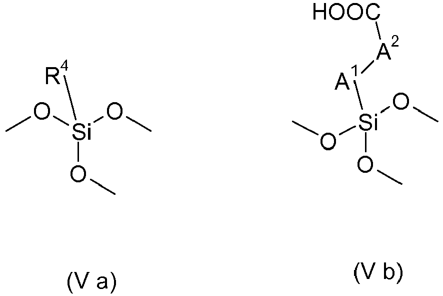 in denen die Variablen wie oben stehend definiert sind. Cyclische unverzweigte Silikonverbindung (B), welche die Strukturelemente der allgemeinen Formel (II) und (III) enthält, enthält üblicherweise weder Strukturelemente der Formel (IV a) noch (IV b).

Die Strukturelemente (II), (III), optional (V a) und (V b) können alternierend, blockweise und bevorzugt statistisch in Silikonverbindung (B) verteilt sein.

In einer Ausführungsform der vorliegenden Erfindung enthält Silikonverbindung (B) im Bereich von 1 bis 50, bevorzugt 2 bis 25, besonders bevorzugt im Mittel 2,5 bis 15 Carboxylgruppen pro Molekül.

In einer Ausführungsform der vorliegenden Erfindung liegt das Molekulargewicht M_{w} von Silikonverbindung (B) im Bereich von 5.000 g bis 150.000 g/mol, bevorzugt 10.000 bis 100.000 g/mol.

Die Molekulargewichtsbestimmung kann durch dem Fachmann bekannte Methoden durchgeführt werden, beispielsweise durch Lichtstreuungsmethoden oder Viskositätsbestimmungen.

In einer Ausführungsform der vorliegenden Erfindung sind alle oder zumindest ein gewisser Anteil, beispielsweise ein Drittel oder die Hälfte, der Carbonsäuregruppen in Silikonverbindung (B) neutralisiert. Zum Neutralisieren eignen sich beispielsweise basische Salze wie Hydroxide oder Carbonate der Alkalimetalle wie beispielsweise Na oder K. Zum Neutralisieren eignen sich weiterhin Ammoniak, Alkylamine wie beispielsweise Methylamin, Dimethylamin, Trimethylamin, Ethylamin, Diethylamin, Triethylamin, Ethylendiamin, Alkanolamine wie beispielsweise Ethanolamin, Diethanolamin, Triethanolamin, N-Methylethanolamin, N-Methyldiethanolamin oder N-(n-Butyl)-diethanolamin.

Als Komponente (C) enthält im erfindungsgemäßen Verfahren eingesetzte wässrige Flotte (C) mindestens eine oberflächenaktive Verbindung, gewählt aus Emulgatoren, die mindestens ein P-Atom pro Molekül aufweisen, kurz auch Emulgator (C) genannt.

Emulgatoren (C) sind vorzugsweise gewählt aus Phosphaten alkoxylierter und insbesondere ethoxylierter Alkanole (Alkylrest C₁₂-C₃₀, bevorzugt C₁₆-C₂₀, Alkoxylierungsgrad, bevorzugt Ethoxylierungsgrad 2 bis 10, bevorzugt 3 bis 5), und aus Phosphaten alkoxylierter und insbesondere ethoxylierter Alkenole (Alkenylrest C₁₂-C₃₀, bevorzugt C₁₄-C₂₀, mit ein bis drei C-C-Doppelbindungen, Alkoxylierungsgrad, bevorzugt Ethoxylierungsgrad 2 bis 10, bevorzugt 3 bis 5). Phosphate alkoxylierter und insbesondere ethoxylierter Alkanole bzw. Alkenole können partiell oder vollständig neutralisiert sein, beispielsweise mit basischer Alkalimetallverbindung, insbesondere mit Kaliumhydroxid oder Natriumhydroxid, oder mit organischem Amin, insbesondere mit Ethanolamin, Diethanolamin, N-Methylethanolamin oder Triethanolamin.

Bevorzugte Beispiele für C₁₂-C₃₀-Alkyl sind n-C₁₂-C₃₀-Alkyl, insbesondere Lauryl (n-C₁₂H₂₅), Myristyl (n-C₁₄H₂₉), Palmityl (n-C₁₆H₃₃) und Stearyl (n-C₁₈H₃₇). Bevorzugte Beispiele für C₁₂-C₃₀-Alkenyl sind cis-Octadec-9-enyl, cis,cis-Octadeca-9,12-dienyl und all-cis-Octadeca-9,12,15-trienyl.

In einer Ausführungsform der vorliegenden Erfindung wählt man als Emulgator (C) mindestens eine Verbindung der allgemeinen Formel (VI) oder (VII), 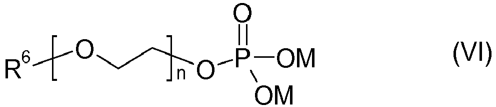 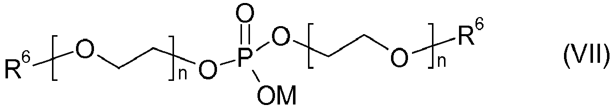
- M: gleich oder verschieden und gewählt aus Wasserstoff, Alkalimetall, insbesondere Natrium oder Kalium, weiterhin Ammonium, unsubstituiert oder organisches Ammonium, insbesondere organisches Ammonium, welches von Ethanolaminen abgeleitet ist, beispielsweise Ethanolammonium, Diethanolammonium, Triethanolammonium, N-Methylethanolammonium, N,N-Dimethylethanolammonium.
- R⁶: verschieden oder vorzugsweise gleich und gewählt aus C₁₂-C₃₀-Alkyl, C₁₂-C₃₀-Alkenyl mit einer bis drei C-C-Doppelbindungen, bevorzugt C₁₆-C₂₀-Alkyl oder C₁₄-C₂₀-Alkenyl mit einer bis drei C-C-Doppelbindungen, wobei in C₁₂-C₃₀-Alkenyl die Doppelbindung(en) bevorzugt cis-sind.
- n: oder vorzugsweise gleich und eine Zahl im Bereich von 2 bis 10, bevorzugt 3 bis 5.

Als Komponente (D) enthält im erfindungsgemäßen Verfahren eingesetzte wässrige Flotte (D) mindestens eine oberflächenaktive Verbindung, gewählt aus N-acylierten Aminosäuren, kurz auch Emulgator (D) genannt.

Geeignet sind N-acylierte β-Aminosäuren und insbesondere N-acylierte α-Aminosäuren beispielsweise der Formel (I) 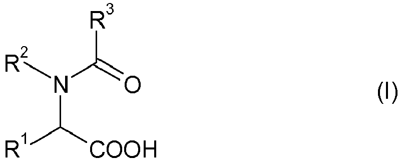 und ihre korrespondierenden Alkalimetall- oder Ammoniumsalze, in denen die Variablen wie folgt definiert sind:
R¹ ist gewählt aus
Wasserstoff,
C₁-C₄-Alkyl, wie Methyl, Ethyl, n-Propyl, iso-Propyl, n-Butyl, iso-Butyl, sec.-Butyl und tert.-Butyl, insbesondere Methyl;
C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
R² ist gewählt aus Wasserstoff und bevorzugt C₁-C₄-Alkyl, wie Methyl, Ethyl, n-Propyl, iso-Propyl, n-Butyl, iso-Butyl, sec.-Butyl und tert.-Butyl; insbesondere Methyl;
Die Gruppe CO-R³ ist üblicherweise von gesättigten oder ungesättigten Fettsäuren abgeleitet. Unter gesättigten Fettsäuren sind Carbonsäuren mit C₉-C₂₀-Alkyl-gruppen zu verstehen, die linear oder verzweigt sein können, substituiert oder unsubstituiert. R³ kann beispielsweise sein: n-Nonyl, n-Decyl, n-Dodecyl, n-Tetradecyl, n-Pentadecyl, n-Octadecyl, n-Eicosyl.

CO-R³ kann von einer ungesättigten Fettsäure mit 9 bis 20 C-Atomen und einer bis 5 C-C-Doppelbindungen abgeleitet sein, wobei die C-C-Doppelbindungen beispielsweise isoliert oder allylisch sein können, beispielsweise der Acylrest der Linolsäure, der Linolensäure, und ganz besonders bevorzugt der Ölsäure.

In einer Ausführungsform der vorliegenden Erfindung sind alle oder zumindest ein gewisser Anteil, beispielsweise ein Drittel oder die Hälfte, der Carboxylgruppen in als Emulgator (D) eingesetzter N-acylierten Aminosäure neutralisiert. Zur Neutralisation eignen sich beispielsweise basische Salze wie Hydroxide oder Carbonate der Alkalimetalle wie beispielsweise Na oder K. Zur Neutralisation eignen sich weiterhin Ammoniak, Alkylamine wie beispielsweise Methylamin, Dimethylamin, Trimethylamin, Ethylamin, Diethylamin, Triethylamin, Ethylendiamin, und ganz besonders Alkanolamine wie beispielsweise Ethanolamin, Diethanolamin, Triethanolamin, N-Methyl-Ethanolamin, N-Methyldiethanolamin oder N-(n-Butyl)-diethanolamin.

Als beispielhafte Vertreter für Verbindungen der Formel (I) seien N-Oleylsarcosin, N-Stearylsarcosin, N-Lauroylsarcosin und N-Isononanoylsarcosin sowie die jeweiligen Natriumsalze, E-thanolammoniumsalze, Diethanolammoniumsalze sowie N-Methyldiethanolammoniumsalze genannt.

Als Komponente (E), kurz auch (Co)polymer (E) genannt, enthält im erfindungsgemäßen Verfahren eingesetzte wässrige Flotte
mindestens eine oberflächenaktive Verbindung, enthaltend mindestens einen C₁₀-C₃₀-Alkylrest, unverzweigt oder verzeigt, oder mindestens einen Polyisobutenrest, und mindestens eine ionische oder in wässrigem Milieu ionisierbare Gruppe. (Co)polymer (E) ist verschieden von amphiphilem Copolymer (A) und von oberflächenaktiver Verbindung (C).

Ionische Gruppen im Zusammenhang mit (Co)polymer (E) sind beispielsweise Sulfonsäuregruppen, -N(C₂H₅)-Gruppen, -N(CH₃)₃-Gruppen und insbesondere Carboxylatgruppen.

In wässrigem Milieu ionisierbare Gruppen im Zusammenhang mit (Co)polymer (E) sind beispielsweise Carbonsäuregruppen und Bernsteinsäureanhydrid-Gruppen. Bernsteinsäureanhydrid-Gruppen (Succinylanhydridgruppen) gehen in wässriger Lösung durch Hydrolyse und Deprotionierung leicht in ionische Gruppen über.

In einer Ausführungsform der vorliegenden Erfindung hat (Co)polymer (E) ein mittleres Molekulargewicht Mₙ im Bereich von 500 bis 5.500 g/mol, bevorzugt 800 bis 2.300 g/mol.

Unter Polyisobutenresten werden im Rahmen der vorliegenden Erfindung verzweigte Alkylreste verstanden, die im Wesentlichen abwechselnd CH₂-Gruppen und C(CH₃)₂-Gruppen aufweisen.

(Co)polymer (E) mit mindestens einem C₁₀-C₃₀-Alkylrest kann man beispielsweise durch Homo- oder Copolymerisation von C₁₂-C₃₂-Alken herstellen. Als Comonomere sind ein oder mehrere Olefine geeignet, beispielsweise Ethylen, Propylen, 1-Buten, 1-Hexen, 1-Okten, 1-Decen, 1-Dodecen, insbesondere Ethylen und Propylen geeignet, weiterhin Styrol. In solchen Ausführungsformen ist (Co)polymer (E) aus C₁₂-C₃₂-Alken und gegebenenfalls Ethylen, Propylen, 1-Buten, 1-Hexen, 1-Okten, 1-Decen oder Styrol aufgebaut.

(Co)polymer (E) mit einem oder mehreren Isobutenresten kann man durch Homo- oder Copolymerisation von Isobuten herstellen. Als Comonomere sind ein oder mehrere 1-Olefine geeignet, bevorzugt Ethylen, Propylen, 1-Buten, 1-Hexen, 1-Okten, 1-Decen, 1-Dodecen, Styrol, insbesondere 1-Propylen. In solchen Ausführungsformen ist (Co)polymer (E) aus Isobuten und gegebenenfalls Ethylen, Propylen, 1-Buten, 1-Hexen, 1-Okten, 1-Decen, 1-Dodecen oder Styrol aufgebaut.

In einer Ausführungsform der vorliegenden Erfindung handelt es sich bei (Co)polymer (E) um ein Copolymer, das durch Copolymerisation von C₁₂-C₃₂-Alken oder Isobuten mit insgesamt bis zu 25 Gew.-% einem oder mehreren Comonomeren, gewählt aus Ethylen, Propylen, 1-Buten, 1-Hexen, 1-Okten, 1-Decen oder - im Falle von Isobuten als hauptsächlich vorliegendem Comonomer- 1-Dodecen hergestellt werden kann.

In einer Ausführungsform der vorliegenden Erfindung weist (Co)polymer (E) einen Polyisobutylrest und eine oder zwei Carbonsäuregruppen pro Molekül auf.

In einer anderen Ausführungsform der vorliegenden Erfindung ist (Co)polymer (E) ein funktionalisiertes (Co)polymer. Darunter soll verstanden werden, dass man ein (Co)polymer von C₁₂-C₃₂-Alken oder Isobuten, wie vorstehend beschrieben, in einer durch Einführung von einer oder mehreren funktionellen Gruppen modifizierten Form einsetzt. Funktionelle Gruppen kann man insbesondere durch polymeranaloge Reaktionen einführen. Vorzugsweise kann man dazu nach dem (Co)polymerisationsprozess verbliebene C-C-Doppelbindungen durch polymeranaloge Reaktionen wie Hydroborierungen, Oxidationen, und insbesondere en-Reaktionen mit ethylenisch ungesättigten Mono- oder Dicarbonsäuren oder deren Anhydriden umgesetzte (Co)polymere von C₁₂-C₃₂-Alken oder Isobuten einsetzen. Beispiele für ethylenisch ungesättigten Mono- oder Dicarbonsäuren und deren Anhydride sind Acrylsäure, Methacrylsäure, Itaconsäureanhydrid, Maleinsäure und insbesondere Maleinsäureanhydrid.

In einer besonders bevorzugten Ausführungsform der vorliegenden Erfindung handelt es sich bei (Co)polymer (E) um ein durch en-Reaktion mit Acrylsäure oder vorzugsweise mit Maleinsäure oder Maleinsäureanhydrid funktionalisiertes Polyisobuten.

Zur Durchführung des erfindungsgemäßen Verfahrens kann man beispielsweise 0,1 bis 30 Gew.-% Copolymer (A), bezogen auf das (Spalt)-gewicht der betreffenden Blöße, Pickelblöße oder des betreffenden Halbzeugs, einsetzen.

Zur Durchführung des erfindungsgemäßen Verfahrens kann man beispielsweise 0,01 bis 20 Gew.-% Silikonverbindung (B), bezogen auf das Spaltgewicht der betreffenden Blöße, Pickelblöße oder des betreffenden Halbzeugs, einsetzen

Zur Durchführung des erfindungsgemäßen Verfahrens kann man beispielsweise 0,01 bis 20 Gew.-% Emulgator (C), bezogen auf das Spaltgewicht der betreffenden Blöße, Pickelblöße oder des betreffenden Halbzeugs, einsetzen.

Zur Durchführung des erfindungsgemäßen Verfahrens kann man beispielsweise 0,01 bis 20 Gew.-% Emulgator (D), bezogen auf das Spaltgewicht der betreffenden Blöße, Pickelblöße oder des betreffenden Halbzeugs, einsetzen.

Zur Durchführung des erfindungsgemäßen Verfahrens kann man beispielsweise 0,01 bis 30 Gew.-% (Co)polymer (E), bezogen auf das Spaltgewicht der betreffenden Blöße, Pickelblöße oder des betreffenden Halbzeugs, einsetzen.

In einer Ausführungsform der vorliegenden Erfindung weist die im erfindungsgemäßen Verfahren eingesetzte wässrige Flotte einen Wirkstoffgehalt von 0,1 bis 50 Gew.-%, bevorzugt bis 15 Gew.-% auf, bezogen jeweils auf zu behandelndes Halbzeug bzw. Blöße.

Das erfindungsgemäße Verfahren kann man in weichem oder in hartem Wasser durchführen. Geeignet ist beispielsweise auch Wasser mit einer oberhalb von 20° dH (deutsche Härte). Geeignet ist auch extrem hartes Wasser mit einer Härte beispielsweise oberhalb von 60°dH, insbesondere bis zu 200°dH.

Das erfindungsgemäße Verfahren kann man beispielsweise als Gerbverfahren, als Nachgerbverfahren oder als Hydrophobierverfahren ausführen.

Das erfindungsgemäße Verfahren übt man im Allgemeinen so aus, dass man mindestens eine wässrige Flotte, enthaltend die vorstehend genannten Komponenten (A) bis (E), auf Blöße, insbesondere Pickelblöße, oder Halbzeug einwirken lässt. Das erfindungsgemäße Verfahren wird vorzugsweise bei einem pH-Wert von 2,5 bis 11 bevorzugt zwischen 4,5 und 6 durchgeführt, wobei man häufig beobachtet, dass der pH-Wert während der Durchführung des erfindungsgemäßen Verfahrens um etwa 0,3 bis drei Einheiten ansteigen kann.

Das erfindungsgemäße Verfahren führt man im Allgemeinen bei Temperaturen von 10 bis 60°C, bevorzugt bei 20 bis 40°C durch. Bewährt hat sich eine Dauer von 10 Minuten bis 12 Stunden, bevorzugt sind eine bis drei Stunden. Das erfindungsgemäße Verfahren kann man in beliebigen gerbereiüblichen Gefäßen durchführen, beispielsweise durch Walken in Fässern oder in gedrehten Trommeln.

Das erfindungsgemäße Gerbverfahren führt man im Allgemeinen bei Temperaturen von 10 bis 45°C, bevorzugt bei 20 bis 30°C durch. Bewährt hat sich eine Dauer von 10 Minuten bis 12 Stunden, bevorzugt sind eine bis drei Stunden. Das erfindungsgemäße Gerbverfahren kann man in beliebigen gerbereiüblichen Gefäßen durchführen, beispielsweise durch Walken in Fässern oder in gedrehten Trommeln.

In einer Variante des erfindungsgemäßen Gerbverfahrens setzt man weiterhin einen oder mehrere herkömmliche Gerbstoffe ein, beispielsweise Chromgerbstoff, mineralischen Gerbstoff, Syntan, Polymergerbstoff oder vegetabilen Gerbstoff, wie sie beispielsweise beschrieben sind in Ullmann's Encyclopedia of Industrial Chemistry, Band A15, Seite 259 bis 282 und insbesondere Seite 268 ff., 5. Auflage, (1990), Verlag Chemie Weinheim. Das Gewichtsverhältnis von Copolymer (A) : herkömmlicher Gerbstoff bzw. Summe der herkömmlichen Gerbstoffe beträgt zweckmäßig von 0,01 : 1 bis 100 : 1. In einer vorteilhaften Variante des erfindungsgemäßen Verfahrens setzt man nur wenige ppm der herkömmlichen Gerbmittel den oben beschriebenen Flotten zu. Besonders vorteilhaft ist es jedoch, auf die Beimischung herkömmlicher Gerbstoffe ganz zu verzichten.

Man kann das erfindungsgemäße Verfahren zur Herstellung von Leder vorzugsweise als Verfahren zum Nachgerben von Leder unter der Verwendung von wässriger Flotte, enthaltend Komponenten (A) bis (E)durchführen, im Folgenden auch erfindungsgemäßes Nachgerbverfahren genannt. Das erfindungsgemäße Nachgerbverfahren geht aus von konventionell gegerbten Halbzeugen, d.h. beispielsweise mit Chromgerbstoffen, mineralischen Gerbstoffen, Polymergerbstoffen, Aldehyden, Syntanen oder Harzgerbstoffen gegerbten Halbzeugen. Zur Durchführung des erfindungsgemäßen Nachgerbverfahrens lässt man wässrige Flotte, enthaltend Komponenten (A) bis (E), auf Halbzeuge einwirken.

In einer Variante kann man von Halbzeugen ausgehen, die nach dem erfindungsgemäßen Gerbverfahren hergestellt worden sind.

Das erfindungsgemäße Nachgerbverfahren kann man unter ansonsten üblichen Bedingungen zur Nachgerbung durchführen. Man wählt zweckmäßig einen oder mehrere, d.h. beispielsweise 2 bis 6 Einwirkschritte und kann zwischen den Einwirkschritten mit Wasser spülen. Die Temperatur bei den einzelnen Einwirkschritten liegt jeweils im Bereich von 5 bis 60°C, bevorzugt 20 bis 45°C. Man setzt zweckmäßig weitere, während der Nachgerbung üblicherweise verwendete Mittel ein, beispielsweise Fettlicker, Nachgerbstoffe auf Basis von Harz- und Vegetabilgerbstoffen, Füllstoffe, Lederfarbstoffe oder Emulgatoren.

Das erfindungsgemäße Hydrophobierverfahren übt man im Allgemeinen so aus, dass man mindestens eine wässrige Flotte, enthaltend die vorstehend genannten Komponenten (A) bis (E), auf Blöße, insbesondere Pickelblöße, oder Halbzeug einwirken lässt. Das erfindungsgemäße Hydrophobierverfahren wird vorzugsweise bei einem pH-Wert von 2,5 bis 11 bevorzugt von 4,5 bis 6 durchgeführt, wobei man häufig beobachtet, dass der pH-Wert während der Durchführung des erfindungsgemäßen Hydrophobierverfahrens um etwa 0,3 bis drei Einheiten ansteigen kann.

Das erfindungsgemäße Hydrophobierverfahren führt man im Allgemeinen bei Temperaturen von 10 bis 60°C, bevorzugt bei 20 bis 40°C durch. Bewährt hat sich eine Dauer von 10 Minuten bis 12 Stunden, bevorzugt sind eine bis drei Stunden. Das erfindungsgemäße Verfahren kann man in beliebigen gerbereiüblichen Gefäßen durchführen, beispielsweise durch Walken in Fässern oder in gedrehten Trommeln.

Das erfindungsgemäße Hydrophobierverfahren kann man unter ansonsten üblichen Bedingungen zur Hydrophobierung durchführen. Man wählt zweckmäßig einen oder mehrere, d.h. beispielsweise 1 bis 6 Einwirkschritte und kann zwischen den Einwirkschritten mit Wasser spülen. Die Temperatur bei den einzelnen Einwirkschritten liegt jeweils im Bereich von 5 bis 60°C, bevorzugt 20 bis 40°C. Man setzt zweckmäßig weitere, während der Nachgerbung üblicherweise verwendete Mittel ein, beispielsweise Fettlicker, Nachgerbstoffe auf Basis von Harz-, Polymer-, Synthan- und Vegetabilgerbstoffen, Füllstoffe, Lederfarbstoffe oder Emulgatoren.

Ein weiterer Aspekt der vorliegenden Erfindung sind Leder, hergestellt durch das erfindungsgemäße Gerbverfahren oder das erfindungsgemäße Nachgerbverfahren oder durch eine Kombination aus erfindungsgemäßem Gerbverfahren und erfindungsgemäßen Nachgerbverfahren. Die erfindungsgemäßen Leder zeichnen sich durch eine insgesamt vorteilhafte Qualität aus, beispielsweise sind sie besonders weich und festnarbig. Die erfindungsgemäßen Leder enthalten Copolymer (A), (Co)polymer (E) und Silikonverbindung (E) und gegebenenfalls eingesetzten Lederfarbstoff besonders gleichmäßig über den Querschnitt verteilt. Außerdem neigen erfindungsgemäße Leder nicht zur Bildung von Fettflecken.

Ein weiterer Aspekt der vorliegenden Erfindung ist die Verwendung der erfindungsgemäßen Leder zur Herstellung von Bekleidungsstücken, Möbeln oder Autoinnenteilen. Unter Bekleidungsstücke sind im Sinne der vorliegenden Erfindung beispielsweise Jacken, Hosen, Schuhe, Handschuhe, Gürtel oder Hosenträger zu nennen. Unter Möbeln sind im Zusammenhang mit der vorliegenden Erfindung alle solchen Möbel zu nennen, die Bestandteile aus Leder enthalten. Beispielhaft seien Sitzmöbel genannt wie etwa Sessel, Stühle, Sofas. Unter Autoinnenteilen seien beispielhaft Autositze, Lenkradbespannungen und Bespannungen von Armaturenbrettern genannt.

Ein weiterer Aspekt der vorliegenden Erfindung sind Bekleidungsstücke, enthaltend die oder hergestellt aus erfindungsgemäßen Ledern. Ein weiterer Aspekt der vorliegenden Erfindung sind Möbel, enthaltend die oder hergestellt aus erfindungsgemäßen Ledern. Ein weiterer Aspekt der vorliegenden Erfindung sind Autoinnenteile, enthaltend die oder hergestellt aus erfindungsgemäßen Ledern.

Ein weiterer Aspekt der vorliegenden Erfindung sind wässrige Formulierungen, kurz als erfindungsgemäße wässrige Formulierungen bezeichnet, beispielsweise wässrige Lösungen, Dispersionen oder insbesondere Emulsionen, enthaltend
(A) mindestens ein amphiphiles organisches Copolymer,
(B) mindestens eine Silikonverbindung, die mindestens eine Carbonsäuregruppe oder mindestens eine Carbonsäureanhydridgruppe pro Molekül aufweist,
(C) mindestens eine oberflächenaktive Verbindung, gewählt aus Emulgatoren, die mindestens ein P-Atom pro Molekül aufweisen,
(D) mindestens eine oberflächenaktive Verbindung, gewählt aus N-acylierten Aminosäuren,
(E) mindestens ein (Co)polymer, enthaltend mindestens einen C₁₀-C₃₀-Alkylrest, unverzweigt oder verzeigt, oder mindestens einen Polyisobutenrest, und das verschieden ist von amphiphilem Copolymer (A).

Erfindungsgemäße wässrige Formulierungen sind frei von Ölen und Wachsen. Erfindungsgemäße wässrige Formulierungen sind ganz besonders gut geeignet zur Durchführung des erfindungsgemäßen Verfahrens.

Komponenten (A) bis (E) sind vorstehend beschrieben.

In einer Ausführungsform der vorliegenden Erfindung stellt man eine wässrige Flotte für das erfindungsgemäße Verfahren her, indem man erfindungsgemäße wässrige Formulierung mit Wasser verdünnt und gegebenenfalls mit einem oder mehreren herkömmlichen Gerbstoffen oder Lederfarbstoffen versetzt.

In einer Ausführungsform der vorliegenden Erfindung weisen erfindungsgemäße wässrige Formulierungen einen Feststoffgehalt im Bereich von 10 bis 85 %, bevorzugt 20 bis 65 %, besonders bevorzugt mindestens 25 Gew.-% auf.

In einer Ausführungsform der vorliegenden Erfindung weist (Co)polymer (E) einen Polyisobutylrest und eine oder zwei Carbonsäuregruppen pro Molekül auf.

In einer Ausführungsform der vorliegenden Erfindung weisen erfindungsgemäße wässrige Formulierungen einen pH-Wert im Bereich von 3 bis 10 auf, bevorzugt im Bereich von 4 bis 8.

In einer Ausführungsform der vorliegenden Erfindung ist amphiphiles organisches Copolymer (A) erhältlich durch Copolymerisation von folgenden Comonomeren
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid,
(b) mindestens einem (Meth)acrylat eines α-verzweigten C₃-C₁₀-Alkanols,
(c) mindestens einem (Meth)acrylat eines primären C₄-C₂₀-Alkanols.

In einer Ausführungsform der Carbonsäure (a) gewählt aus (Meth)acrylsäure, insbesondere Acrylsäure.

In einer Ausführungsform der vorliegenden Erfindung handelt es sich bei mindestens einem Comonomer (b) um ein Methacrylat eines tertiären C₄-C₁₀-Alkanols.

In einer Ausführungsform der vorliegenden Erfindung handelt es sich bei mindestens einem Comonomer (c) um ein Acrylat eines primären β- oder γ-verzweigten C₄-C₂₀-Alkohols.

In einer Ausführungsform der vorliegenden Erfindung handelt es sich bei mindestens einem Comonomer (b) um ein Methacrylat eines tertiären C₄-C₁₀-Alkanols und bei mindestens einem Comonomer (c) um ein Acrylat eines primären β- oder γ-verzweigten C₄-C₂₀-Alkohols.

In einer Ausführungsform der vorliegenden Erfindung wählt man Silikonverbindung (B) aus Polysiloxanen, die Strukturelemente der Formeln (II), (III) und optional (IV a) und (IV b)

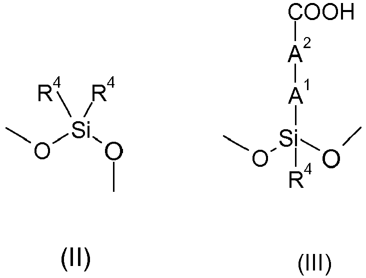

-Si(R⁴)₃ (IV a)

-OSi(R⁴)₃ (IV b)

enthalten, in denen die Variablen wie folgt definiert sind:
R⁴ gleich oder verschieden und unabhängig voneinander Wasserstoff, Hydroxyl, C₁-C₄-Alkyl, C₆-C₁₄-Aryl, C₁-C₄-Alkoxy, Amino, Mono-C₁-C₄-Alkylamino, Di-C₁-C₄-Alkylamino, oder A¹-A²-COOH,
A¹ eine direkte Bindung, Sauerstoff oder eine Amino- Carbonyl-, Amido- oder Estergruppe,
A² gleich oder verschieden und lineares oder verzweigtes C₅-C₂₅-Alkylen.

In einer Ausführungsform der vorliegenden Erfindung kann Silikonverbindung (B) zusätzlich Strukturelemente beispielsweise der Formel (V a) oder (V b) 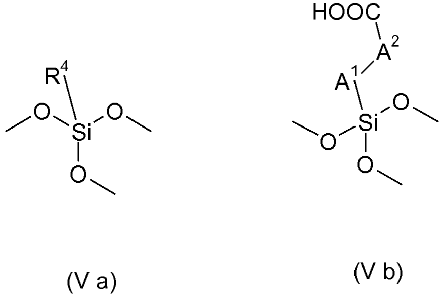 aufweisen, in denen die Variablen wie oben stehend definiert sind.

In einer Ausführungsform der vorliegenden Erfindung wählt man Emulgator (C) aus Phosphaten alkoxylierter und insbesondere ethoxylierter Alkanole (Alkylrest C₁₂-C₃₀, bevorzugt C₁₆-C₂₀, Alkoxylierungsgrad, bevorzugt Ethoxylierungsgrad 2 bis 10, bevorzugt 3 bis 5), und aus Phosphaten alkoxylierter und insbesondere ethoxylierter Alkenole (Alkenylrest C₁₂-C₃₀, bevorzugt C₁₄-C₂₀, mit ein bis drei C-C-Doppelbindungen, Alkoxylierungsgrad, bevorzugt Ethoxylierungsgrad 2 bis 10, bevorzugt 3 bis 5).

In einer Ausführungsform der vorliegenden Erfindung wählt man Emulgator (D) aus mindestens einer Verbindung der allgemeinen Formel (I) 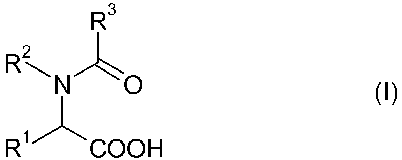 oder ihrem korrespondierenden Alkalimetall- oder Ammoniumsalz,
wobei in Formel (I) die Variablen wie folgt definiert sind:
- R¹: gewählt aus Wasserstoff, C₁-C₄-Alkyl und C₆-C₁₄-Aryl,
- R²: gewählt aus Wasserstoff oder C₁-C₄-Alkyl,
- CO-R³: ist gewählt aus Acylresten, die sich von ein oder mehrfach ethylenisch ungesättigten oder von gesättigten Fettsäuren ableitet.

In einer Ausführungsform der vorliegenden Erfindung hat (Co)polymer (E) ein mittleres Molekulargewicht Mₙ im Bereich von 500 bis 2.500 g/mol, bevorzugt 800 bis 2.300 g/mol.

In einer Ausführungsform der vorliegenden Erfindung ist (Co)polymer ein funktionalisiertes (Co)polymer.

Die Erfindung wird durch Arbeitsbeispiele erläutert.

I. Herstellung von erfindungsgemäßen wässrigen Formulierungen

Man setzte die folgenden Komponenten ein:
(A.1): Copolymer aus Beispiel I.1.2, WO 2009/030697
(A.2): Copolymer aus Beispiel I.2.2, WO 2009/030697
(A.3): Copolymer aus Beispiel I.6.2, WO 2009/030697
(B.1): Polysiloxan der Formel 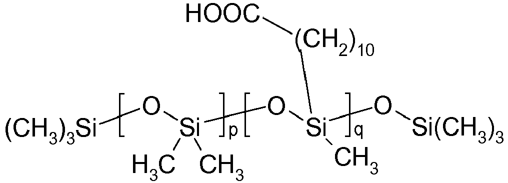 als statistisches Cokondensat mit q = 3 und p = 145 (jeweils Durchschnittswerte), kinematische Viskosität 600 mm²/s bei 20°C.
(C.1): Mischung von Mono- und Diestern von Phosphorsäure mit ethoxylierten Oleylalkoholen enthaltend als Hauptkomponente CH₃(CH₂)₇-CH=CH-(CH₂)₈-O-(CH₂CH₂O)₃-P(O)(OH)₂, C-C-Doppelbindung in (Z)-Konfiguration; CAS Nr. 91254-26-1
(C.2): Mischung von Mono- und Diestern von Phosphorsäure mit ethoxylierten Fettalkoholen, CAS Nr. 106233-09-4
(D.1): Na-Salz von N-Oleylsarkosid
(E.1): Polyisobuten, umgesetzt mit einem Äquivalent Maleinsäure nach en-Reaktion, kinematische Schmelzeviskosität: 40°C: 27900 mm²/s, bestimmt jeweils nach DIN 51562. Verseifungszahl 87 mg KOH/g. Mₙ: 1000 g/mol.

Vergleichs-Wachs (V-E.2): Paraffingatsch, Schmelzpunkt 36 bis 38 °C.

Aus den Komponenten (A) bis (E) wurden wässrige Formulierungen mit Zusammensetzungen gemäß Tabelle 1 hergestellt.

**Tabelle 1: Zusammensetzung der erfindungsgemäßen wässrigen Formulierungen EM.1 bis EM.8**

| Formulierung | (A) | (B.1) | (C) | (D.1) | (E) |
|---|---|---|---|---|---|
| EM.1 | (A.1), 15 | 2 | (C.1), 4 | 2,5 | (E.1), 6 |
| EM.2 | (A.1), 20 | 4 | (C.1), 5 | 4 | (E.1), 5 |
| EM.3 | (A.2), 20 | 2 | (C.2), 8 | 8 | (E.1), 4 |
| EM.4 | (A.3), 20 | 2 | (C.2), 8 | 8 | (E.1), 4 |
| EM.5 | (A.1), 15 | 1 | (C.2), 5 | 5 | (E.1), 3 |
| V-EM.6 | (A.1), 15 | 1 | (C.1), 3 | --- | (V-E.2) 15 |
| V-EM.7 | (A.2), 15 | 2 | (C.1), 3 | --- | (V-E.2) 15 |
| V-EM.8 | (A.3), 15 | 1 | (C.1), 3 | --- | (V-E.2) 20 |

Mengeangaben in Gew.-% sind jeweils bezogen auf Wirkstoff in der gesamten Emulsion

Von Komponente (D) wurde ein Premix bestehend aus 72 Gew% VE Wasser, 8 Gew% einer 25 %igen Lösung von NaOH in Wasser sowie 20 Gew %Komponente (D) hergestellt.

Zur Herstellung von wässrigen Formulierungen EM.1 bis EM-5 wurden 30 Gew%, bezogen auf die herzustellende Emulsion, an VE Wasser vorgelegt. Komponenten (D), (B) und (E.1) wurden zugegeben und die Mischung auf 70°C erhitzt.
Anschließend wurde mit Natronlauge (25Gew%ig in Wasser) auf pH 10 eingestellt und Komponente (C) zugegeben und für 60 Minuten bei 70°C gerührt. Danach wurde Komponente (A) zugegeben und 10 Minuten bei 70°C gerührt. Der pH Wert der Mischung wurde auf 8 eingestellt und mit VE Wasser aufgefüllt.
Anschließend wurde mit einem Ultraturrax T50 (Firma Jamke & Kunkel) bei 4000 U/min für 60 Sekunden gerührt.

Zur Herstellung von wässrigen Formulierungen V-EM.6 bis V-EM.8 wurden 30 Gew%, bezogen auf die herzustellende Emulsion, an VE Wasser vorgelegt. Komponente (C) wurde zugegeben und die Mischung auf 70°C erhitzt.
Anschließend wurde mit Natronlauge (25Gew%ig in Wasser) auf pH 7 eingestellt und Komponente (B) sowie Komponente (V-E.2) zugegeben und für 60 Minuten bei 70°C gerührt. Danach wurde Komponente (A) zugegeben und 10 Minuten bei 70°C gerührt. Der PH Wert der Mischung wurde mit Natronlauge auf 8 eingestellt und mit VE Wasser aufgefüllt.
Anschließend wurde mit einem Ultraturrax T50 (Firma Jamke & Kunkel) bei 4000 U/min für 60 Sekunden gerührt.

Zum Testen der Stabilität der Emulsionen und Vergleichsemulsionen wurden sie mit hartem Wasser (80 °dH) im Volumenverhältnis 1:3 und 1:5 für einen Zeitraum von einer Minute mit einem Magnetrührer gerührt, und nach einer Stunde und nach 12 Stunden optisch auf Stabilität geprüft. Wenn eine Emulsion gleichförmig aussah, wurde sie als stabil bezeichnet. Das Ergebnis ist in Tabelle 2 wieder gegeben.

**Tabelle 2: Stabilität der wässrigen Formulierungen EM.1 bis EM.8 bei Mischung mit hartem Wasser**

| Hydrophobiermittel (Emulsion) | Hydrophobiermittel (Emulsion) / Wasser 80°dH 1 : 3 | | Hydrophobiermittel (Emulsion)/ Wasser 80°dH 1 : 5 | |
|---|---|---|---|---|
| | 1h | 12h | 1h | 12h |
| | | | | |
| **EM.1** | stabil | stabil | stabil | stabil |
| | | | | |
| **EM.5** | stabil | stabil | stabil | stabil |
| | | | | |
| **EM.2** | stabil | stabil | stabil | stabil |
| | | | | |
| **EM.3** | stabil | stabil | stabil | stabil |
| | | | | |
| **EM.4** | stabil | stabil | stabil | stabil |
| | | | | |
| **V-EM.6** | flockt aus | flockt aus | flockt aus | flockt aus |
| | | | | |
| **V-EM.7** | flockt aus | flockt aus | flockt aus | flockt aus |
| | | | | |
| **V-EM.8** | flockt aus | flockt aus | flockt aus | flockt aus |

### II. Herstellung von hydrophobiertem Schuhoberleder

Angaben in % sind stets Gew.-% und beziehen sich auf die Pickelblöße, wenn nicht ausdrücklich anders angegeben. Die Werte in % beziehen sich bei Wirkstoffformulierungen stets auf den Feststoff- oder Wirkstoffgehalt. Die Herstellung des Leders erfolgte mit hartem Wasser mit 80°dH.

Zwei handelsübliche Rinder-Wetblue (US-Packers) wurden auf eine Stärke von 1,7-1,9 mm gefalzt. Der Kernbereich wurde in vier Streifen zu je ca. 800 g geschnitten. Anschließend wurden die Streifen in einem Fass (50 I) und einer Flottenlänge von 200 % (bezogen auf Falzgewicht) im Abstand von 10 Minuten mit 2 % Natriumformiat und 0,6 % Natriumbicarbonat beschickt. Die Leder wurden über Nacht im Abstand von 30 Minuten je 3 Minuten gewalkt. Anschließend wurde die Flotte abgelassen. Die Streifen wurden dann auf separate Walk-Fässer verteilt.

Die separaten Walk-Fässer wurden dann mit 200 % Wasser (35°C) beschickt. Danach wurde mit 4 % einer 40 Gew.-% wässrigen Polymethacrylsäurelösung (Mₙ 30.000 g/mol, pH-Wert 5,5) versetzt. Man walkte 30 Minuten und dosierte in Folge jeweils 5% Vegetabilgerbstoff Mimosa, 3 % eines Harzgerbstoffs auf der Basis von Melaminkondensationsprodukten und 1% eines Nachgerbstoffs auf der Basis von Phenolsulfonsäure-Kondensationsproduktes mit organischen Stickstoffbasen. Nach 30 Minuten wurden 3 % einer 50 Gew.-% (Feststoffgehalt) wässrigen Lösung von Farbstoffen dosiert, deren Feststoffe wie folgt zusammengesetzt waren:
70 Gewichtsteile Farbstoff aus EP-B 0 970 148, Beispiel 2.18,
30 Gewichtsteile Acid Brown 75 (Eisenkomplex), Colour Index 1.7.16

Danach wurde bei 60°C mit 7 % je einer frisch präparierten Formulierung gemäß Tabelle 1 pro separatem Fass versetzt und 30 Minuten gewalkt. Es wurde dann mit Ameisensäure in mehreren Schritten auf einen pH-Wert on 3,5 abgesäuert und noch 20 Minuten bei diesem pH-Wert gewalkt und die Flotte abgelassen. In frischer Flotte (100%-150%) fixierte man bei 40°C mit 3% handelsüblichem Chromsulfat (Chromitan® B, 33% basisch, Cr₂O₃-Gehalt: 27%) über eine Dauer von 90 Minuten. Anschließend wurde zweimal mit je 150% Wasser gewaschen und die Leder über Nacht gelagert und anschließend ausgereckt, vakuumgetrocknet, konditioniert und gestollt.

Man erhielt die erfindungsgemäßen Leder L.1 bis L.5 sowie die Vergleichsleder L.6 bis L.8. Bei der Herstellung der Vergleichsleder L.6 bis L.8 ist Hydrophobierungsmittel im Fass ausgefallen. In der Flotte und an den Wandungen der Walkfässer wurde eine Schmiere beobachtet. Durch die Ausfällungen während der Anwendung wurden die Lederoberflächen wachsiger, fleckiger und unegaler (Pullup-ähnliche Effekte).
Erfindungsgemäße Leder L.1 bis L.5 wiesen eine egale Färbung auf und zeigten keine Pullupähnlichen Effekte. Hydrophobiermittel fiel während der Anwendung nicht aus. Es wurde keine Schmiere in Flotte oder Wandung beobachtet.

## Patentansprüche

1. Verfahren zur Herstellung von Leder, **dadurch gekennzeichnet, dass** man Halbzeuge, Crust-Leder oder Blößen behandelt mit mindestens einer wässrigen Flotte, enthaltend
(A) mindestens ein amphiphiles organisches Copolymer,
(B) mindestens eine Silikonverbindung, die mindestens eine Carbonsäuregruppe oder mindestens eine Carbonsäureanhydridgruppe pro Molekül aufweist,
(C) mindestens eine oberflächenaktive Verbindung, gewählt aus Emulgatoren, die mindestens ein P-Atom pro Molekül aufweisen,
(D) mindestens eine oberflächenaktive Verbindung, gewählt aus N-acylierten Aminosäuren,
(E) mindestens eine oberflächenaktive Verbindung, enthaltend mindestens einen C₁₀-C₃₀-Alkylrest, unverzweigt oder verzeigt, oder mindestens einen Polyisobutenrest, und mindestens eine ionische oder in wässrigem Milieu ionisierbare Gruppe, und die verschieden ist von amphiphilem Copolymer (A) und von oberflächenaktiver Verbindung (C),
und die frei ist von Wachsen und Ölen.

2. Verfahren nach Anspruch 1, **dadurch gekennzeichnet, dass** (Co)polymer (E) ein mittleres Molekulargewicht Mₙ im Bereich von 500 bis 5.500 g/mol hat.

3. Verfahren nach Anspruch 1 oder 2, **dadurch gekennzeichnet, dass** (Co)polymer (E) einen Polyisobutylrest und eine oder zwei Carbonsäuregruppen pro Molekül aufweist.

4. Verfahren nach einem der Ansprüche 1 bis 3, **dadurch gekennzeichnet, dass** amphiphiles organisches Copolymer (A) erhältlich ist durch Copolymerisation von folgenden Comonomeren:
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid,
(b) mindestens einem (Meth)acrylat eines α-verzweigten C₃-C₁₀-Alkanols,
(c) mindestens einem (Meth)acrylat eines primären C₄-C₂₀-Alkanols.

5. Verfahren nach einem der Ansprüche 1 bis 4, **dadurch gekennzeichnet, dass** man N-acylierte Aminosäure (D) wählt aus mindestens einer Verbindung der allgemeinen Formel (I) 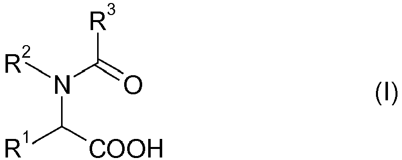 oder ihr korrespondierendes Alkalimetall- oder Ammoniumsalz,
wobei in Formel (I) die Variablen wie folgt definiert sind:
R¹ gewählt aus Wasserstoff, C₁-C₄-Alkyl und C₆-C₁₄-Aryl,
R² gewählt aus Wasserstoff und C₁-C₄-Alkyl,
CO-R³ ist gewählt aus Acylresten, die sich von ein oder mehrfach ethylenisch ungesättigten oder von gesättigten Fettsäuren ableitet.

6. Verfahren nach einem der Ansprüche 1 bis 5, **dadurch gekennzeichnet, dass** Silikonverbindung (B) aus Polysiloxanen gewählt werden, die Strukturelemente der Formeln (II), (I-II) und optional (IV a) und (IV b) 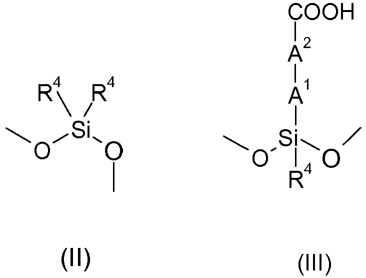
-Si(R⁴)₃ (IV a)
-OSi(R⁴)₃ (IV b)
enthalten, in denen die Variablen wie folgt definiert sind:
R⁴ gleich oder verschieden und unabhängig voneinander Wasserstoff, Hydroxyl, C₁-C₄-Alkyl, C₆-C₁₄-Aryl, C₁-C₄-Alkoxy, Amino, Mono-C₁-C₄-Alkylamino, Di-C₁-C₄-Alkylamino, oder A¹-A²-COOH,
A¹ eine direkte Bindung, Sauerstoff oder eine Amino- Carbonyl-, Amido- oder Estergruppe,
A² gleich oder verschieden und lineares oder verzweigtes C₅-C₂₅-Alkylen.

7. Verfahren nach einem der Ansprüche 1 bis 6, **dadurch gekennzeichnet, dass** man die Behandlung bei Temperaturen im Bereich von 20 bis 65°C durchführt.

8. Verfahren nach einem der Ansprüche 1 bis 7, **dadurch gekennzeichnet, dass** man als Emulgator (C) mindestens eine Verbindung der allgemeinen Formel 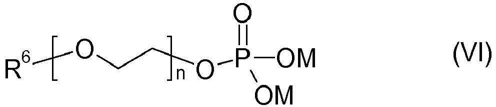 wobei die Variablen wie folgt definiert sind:
M gleich oder verschieden und gewählt aus Wasserstoff, Alkalimetall, Ammonium mit gegebenenfalls einem oder mehreren organischen Rest,
n eine Zahl im Bereich von 2 bis 10,
R⁶ gewählt aus C₁₂-C₃₀-Alkyl und C₁₂-C₃₀-Alkenyl mit einer bis drei C-C-Doppelbindungen.

9. Leder, hergestellt nach einem Verfahren nach einem der Ansprüche 1 bis 8.

10. Wässrige Formulierung, enthaltend
(A) mindestens ein amphiphiles organisches Copolymer,
(B) mindestens eine Silikonverbindung, die mindestens eine Carbonsäuregruppe oder mindestens eine Carbonsäureanhydridgruppe pro Molekül aufweist,
(C) mindestens eine oberflächenaktive Verbindung, gewählt aus Emulgatoren, die mindestens ein P-Atom pro Molekül aufweisen,
(D) mindestens eine oberflächenaktive Verbindung, gewählt aus N-acylierten Aminosäuren,
(E) mindestens eine oberflächenaktive Verbindung, enthaltend mindestens einen C₁₀-C₃₀-Alkylrest, unverzweigt oder verzeigt, oder mindestens einen Polyisobutenrest, und mindestens eine ionische oder in wässrigem Milieu ionisierbare Gruppe, und die verschieden ist von amphiphilem Copolymer (A) und von oberflächenaktiver Verbindung (C),
und die frei ist von Wachsen und Ölen.

11. Wässrige Formulierung nach Anspruch 10, **dadurch gekennzeichnet, dass** (Co)polymer (E) ein mittleres Molekulargewicht Mₙ im Bereich von 500 bis 5.500 g/mol hat.

12. Wässrige Formulierung nach Anspruch 10 oder 11, **dadurch gekennzeichnet, dass** (Co)polymer (E) einen Polyisobutylrest und eine oder zwei Carbonsäuregruppen pro Molekül aufweist

13. Wässrige Formulierung nach einem der Ansprüche 10 bis 12, **dadurch gekennzeichnet, dass** amphiphiles organisches Copolymer (A) erhältlich ist durch Copolymerisation von folgenden Comonomeren
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid,
(b) mindestens einem (Meth)acrylat eines α-verzweigten C₃-C₁₀-Alkanols,
(c) mindestens einem (Meth)acrylat eines primären C₄-C₂₀-Alkanols.

14. Wässrige Formulierung nach einem der Ansprüche 10 bis 13, **dadurch gekennzeichnet, dass** man N-acylierte Aminosäure (D) wählt aus mindestens einer Verbindung der allgemeinen Formel (I) 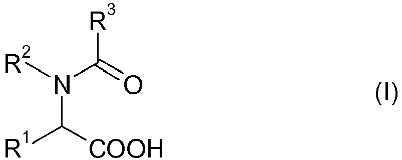 oder ihr korrespondierendes Alkalimetall- oder Ammoniumsalz,
wobei in Formel (I) die Variablen wie folgt definiert sind:
R¹ gewählt aus Wasserstoff, C₁-C₄-Alkyl und C₆-C₁₄-Aryl,
R² gewählt aus Wasserstoff oder C₁-C₄-Alkyl,
CO-R³ ist gewählt aus Acylresten, die sich von ein oder mehrfach ethylenisch ungesättigten oder von gesättigten Fettsäuren ableitet.

15. Wässrige Formulierung nach einem der Ansprüche 10 bis 14, **dadurch gekennzeichnet, dass** man als Emulgator (C) mindestens eine Verbindung der allgemeinen Formel 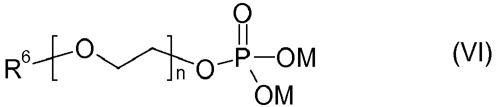 wobei die Variablen wie folgt definiert sind:
M gleich oder verschieden und gewählt aus Wasserstoff, Alkalimetall, Ammonium mit gegebenenfalls einem oder mehreren organischen Rest,
n eine Zahl im Bereich von 2 bis 10,
R⁶ gewählt aus C₁₂-C₃₀-Alkyl und C₁₂-C₃₀-Alkenyl mit einer bis drei C-C-Doppelbindungen.

16. Wässrige Formulierung nach einem der Ansprüche 10 bis 15, **dadurch gekennzeichnet, dass** Silikonverbindung (B) aus Polysiloxanen gewählt werden, die Strukturelemente der Formeln (II), (III) und optional (IV a) und (IV b) 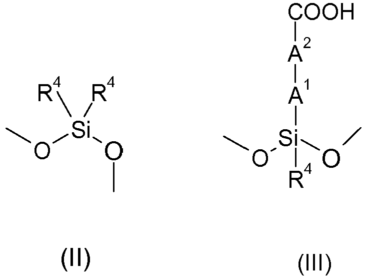
-Si(R⁴)₃ (IV a)
-OSi(R⁴)₃ (IV b)
enthalten, in denen die Variablen wie folgt definiert sind:
R⁴ gleich oder verschieden und unabhängig voneinander Wasserstoff, Hydroxyl, C₁-C₄-Alkyl, C₆-C₁₄-Aryl, C₁-C₄-Alkoxy, Amino, Mono-C₁-C₄-Alkylamino, Di-C₁-C₄-Alkylamino, oder A¹-A²-COOH,
A¹ eine direkte Bindung, Sauerstoff oder eine Amino- Carbonyl-, Amido- oder Estergruppe,
A² gleich oder verschieden und lineares oder verzweigtes C₅-C₂₅-Alkylen.

17. Verwendung von wässrigen Formulierungen nach einem der Ansprüche 10 bis 16 als oder zur Herstellung von wässrigen Flotten zur Herstellung von Leder.

## Claims

1. Process for the production of leather, **characterised in that** semi-finished products, crust leather or pelts are treated with at least one aqueous liquor containing
(A) at least one amphiphilic organic copolymer,
(B) at least one silicone compound having at least one carboxylic acid group or at least one carboxylic anhydride group per molecule,
(C) at least one surface-active compound selected from emulsifiers having at least one P atom per molecule,
(D) at least one surface-active compound selected from N-acylated amino acids,
(E) at least one surface-active compound containing at least one C₁₀-C₃₀-alkyl radical, unbranched or branched, or at least one polyisobutene radical, and at least one ionic group or group ionisable in aqueous medium, and which is different from the amphiphilic copolymer (A) and surface-active compound (C),
and which is free from waxes and oils.

2. Process according to claim 1, **characterised in that** the (co)polymer (E) has a mean molecular weight Mn in the range from 500 to 5.500 g/mol.

3. Process according to claim 1 or 2, **characterised in that** the (co)polymer (E) has one polyisobutyl radical and one or two carboxylic acid groups per molecule.

4. Process according to any one of claims 1 to 3, **characterised in that** the amphiphilic organic copolymer (A) is obtainable by copolymerization of the following comonomers:
(a) at least one ethylenically unsaturated C₃-C₁₀ carboxylic acid or at least one ethylenically unsaturated C₄-C₁₀ dicarboxylic acid or its anhydride,
(b) at least one (meth)acrylate of an α-branched C₃-C₁₀ alkanol,
(c) at least one (meth) acrylate of a primary C₄-C₂₀ alkanol.

5. Process according to any one of claims 1 to 4, **characterised in that** the N-acylated amino acid (D) is selected from at least one compound of the general formula (I) 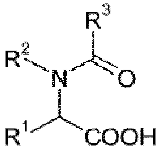 or its corresponding alkali metal or ammonium salt,
wherein in formula (I) the variables are defined as follows:
R¹ is selected from hydrogen, C₁-C₄ alkyl and C₆-C₁₄ aryl,
R² is selected from hydrogen and C₁-C₄ alkyl,
CO-R³ is selected from acyl radicals that are derived from monoethylenically unsaturated or polyethylenically unsaturated fatty acids or from saturated fatty acids.

6. Process according to any one of claims 1 to 5, **characterised in that** the silicone compound (B) is selected from polysiloxanes that contain structural elements of the formulae (II), (I-II) and optionally (IV a) and (IV b) 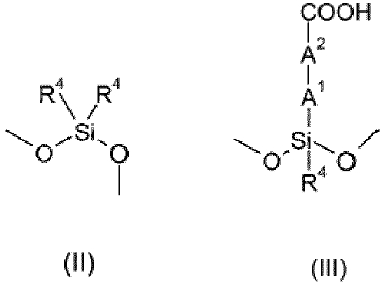
-Si(R⁴)₃ (IV a)
-OSi(R⁴)₃ (IV b)
in which the variables are defined as follows:
R⁴ are identical or different and denote independently of one another hydrogen, hydroxyl, C₁-C₄ alkyl, C₆-C₁₄ aryl, C₁-C₄ alkoxy, amino, mono-C₁-C₄-alkylamino, C₁-C₄-alkylamino, or A¹-A²-COOH,
A¹ denotes a direct bond, oxygen or an amino, carbonyl, amido or ester group,
A² denotes the same or different and denotes linear or branched C₅-C₂₅ alkylene.

7. Process according to any one of claims 1 to 6, **characterised in that** the treatment is carried out at temperatures in the range from 20 to 65°C.

8. Process according to any one of claims 1 to 7, **characterised in that** as emulsifier (C) there is used at least one compound of the general formula 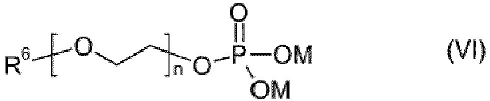 in which the variables are defined as follows:
M is identical or different and is selected from hydrogen, alkali metal, ammonium with optionally one or more organic radicals,
n is a number in the range from 2 to 10,
R⁶ selected from C₁₂-C₃₀ alkyl and C₁₂-C₃₀ alkenyl having one to three C-C double bonds.

9. Leather produced by a process according to any one of claims 1 to 8.

10. Aqueous formulation containing
(A) at least one amphiphilic organic copolymer,
(B) at least one silicone compound having at least one carboxylic acid group or at least one carboxylic anhydride group per molecule,
(C) at least one surface-active compound selected from emulsifiers containing at least one P atom
(D) at least one surface-active compound selected from N-acylated amino acids,
(E) at least one surface-active compound containing at least one C₁₀-C₃₀ alkyl radical, unbranched or branched, or at least one polyisobutene radical, and at least one ionic group or group ionisable in an aqueous medium, and which is different from amphiphilic the copolymer (A) and surface-active compound (C),
and which is free from waxes and oils.

11. Aqueous formulation according to claim 10, **characterised in that** (co)polymer (E) has a mean molecular weight Mn in the range from 500 to 5.500 g/mol.

12. Aqueous formulation according to claim 10 or 11, **characterised in that** (co) polymer (E) has one polyisobutyl radical and one or two carboxylic acid groups per molecule.

13. Aqueous formulation according to any one of claims 10 to 12, **characterised in that** the amphiphilic organic copolymer (A) is obtainable by copolymerisation of the following comonomers
(a) at least one ethylenically unsaturated C₃-C₁₀ carboxylic acid or at least one
ethylenically unsaturated C₄-C₁₀ dicarboxylic acid or its anhydride,
(b) at least one (meth)acrylate of an α-branched C₃-C₁₀ alkanol,
(c) at least one (meth)acrylate of a primary C₄-C₂₀ alkanol.

14. Aqueous formulation according to any one of claims 10 to 13, **characterised in that** the N-acylated amino acid (D) is selected from at least one compound of the general formula (I) 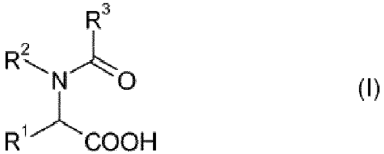 or its corresponding alkali metal or ammonium salt,
where in formula (I) the variables are defined as follows:
R¹ is selected from hydrogen, C₁-C₄ alkyl and C₆-C₁₄ aryl,
R² is selected from hydrogen or C₁-C₄ alkyl,
CO-R³ is selected from acyl radicals that are derived from monoethylenically or polyethylenically unsaturated fatty acids or from saturated fatty acids.

15. Aqueous formulation according to any one of claims 10 to 14, **characterised in that** as emulsifier (C) there is selected at least one compound of the general formula 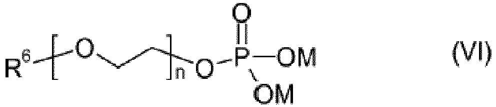 in which the variables are defined as follows:
M is the same or different and is selected from hydrogen, alkali metal, ammonium with optionally one or more organic radicals,
n is a number in the range from 2 to 10,
R⁶ is selected from C₁₂-C₃₀ alkyl and C₁₂-C₃₀ alkenyl with one to three C-C double bonds.

16. Aqueous formulation according to any one of claims 10 to 15, **characterised in that** the silicone compound (B) is selected from polysiloxanes that contain structural elements of the formulae (II), (III) and optionally (IV a) and (IV b) 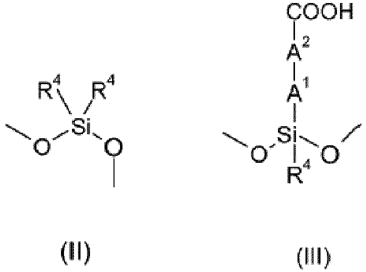
-Si(R⁴)₃ (IV a)
-OSi(R⁴)₃ (IV b)
in which the variables are defined as follows:
R⁴ are identical or different and denote independently of one another hydrogen, hydroxyl, C₁-C₄ alkyl, C₆-C₁₄ aryl, C₁-C₄ alkoxy, amino, mono-C₁-C₄-alkylamino, C₁-C₄-alkylamino, or A¹-A² -COOH,
A¹ a direct bond, oxygen or an amino, carbonyl, amido or ester group,
A² is identical or different and denotes linear or branched C₅-C₂₅ alkylene.

17. Use of aqueous formulations according to any one of claims 10 to 16 as or for the preparation of aqueous liquors for the production of leather.

## Revendications

1. Procédé de fabrication de cuir, **caractérisé en ce qu'**on traite des semi-produits, du cuir en croûte ou des peaux en tripe avec au moins un bain aqueux contenant
(A) au moins un copolymère organique amphiphile,
(B) au moins un composé siliconé, qui présente au moins un groupe acide carboxylique ou au moins un groupe anhydride carboxylique par molécule,
(C) au moins un composé tensioactif, choisi parmi les émulsifiants présentant au moins un atome de P par molécule,
(D) au moins un composé tensioactif choisi parmi les acides aminés N-acylés,
(E) au moins un composé tensioactif contenant au moins un résidu alkyle en C₁₀-C₃₀, à chaîne droite ou ramifiée, ou au moins un résidu de polyisobutène et au moins un groupe ionique ou ionisable en milieu aqueux, et qui est différent du copolymère amphiphile (A) et du composé tensioactif (C),
et qui est exempt de cires et d'huiles.

2. Procédé selon la revendication 1, **caractérisé en ce que** le (co)polymère (E) a une masse moléculaire moyenne Mₙ comprise dans la plage de 500 à 5500 g/mol.

3. Procédé selon la revendication 1 ou 2, **caractérisé en ce que** le (co)polymère (E) présente un résidu polyisobutyle et un ou deux groupes acide carboxylique par molécule.

4. Procédé selon l'une des revendications 1 à 3, **caractérisé en ce que** le copolymère organique amphiphile (A) peut être obtenu par copolymérisation des comonomères suivants :
(a) au moins un acide carboxylique en C₃-C₁₀ à insaturation éthylénique ou au moins un acide dicarboxylique en C₄-C₁₀ à insaturation éthylénique ou son anhydride,
(b) au moins un (méth)acrylate d'un alcool en C₃-C₁₀ à ramification a,
(c) au moins un (méth)acrylate d'un alcool primaire en C₄-C₂₀.

5. Procédé selon l'une des revendications 1 à 4, **caractérisé en ce qu'**on choisit l'acide aminé N-acylé (D) parmi au moins un composé de formule générale (I) 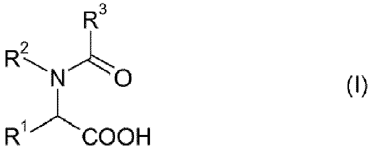 ou son sel d'un métal alcalin ou d'ammonium correspondant,
les variables étant définies comme suit dans la formule (I) :
R¹ est choisi parmi l'atome d'hydrogène, les groupes alkyle en C₁-C₄ et aryle en C₆-C₁₄,
R² est choisi parmi l'atome d'hydrogène et les groupes alkyle en C₁-C₄,
CO-R³ est choisi parmi les résidus acyle qui dérivent d'acides gras à une ou plusieurs insaturations éthyléniques, ou saturés.

6. Procédé selon l'une des revendications 1 à 5, **caractérisé en ce que** le composé silicone (B) est choisi parmi les polysiloxanes qui contiennent des éléments structuraux de formules (II), (I-II) et en option (IV a) et (IV b) 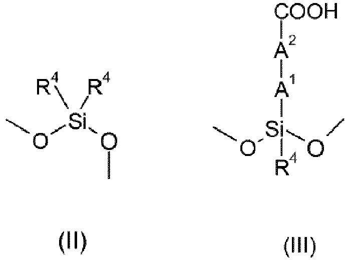
-Si(R⁴)₃ (IV a)
-OSi(R⁴)₃ (IV b)
dans lesquelles les variables sont définies comme suit :
les radicaux R⁴ sont identiques ou différents et sont choisis indépendamment l'un de l'autre parmi l'atome d'hydrogène, les groupes hydroxyle, alkyle en C₁-C₄, aryle en C₆-C₁₄, alcoxy en C₁-C₄, amino, mono(alkyle en C₁-C₄)amino, di(alkyle en C₁-C₄)amino ou A¹-A²-COOH,
A¹ représente une liaison directe, un atome d'oxygène ou un groupe amino, carbonyle, amido ou ester,
les groupes A² sont identiques ou différents et représentent chacun un groupe alkylène en C₅-C₂₅ à chaîne droite ou ramifiée.

7. Procédé selon l'une des revendications 1 à 6, **caractérisé en ce qu'**on met en oeuvre le traitement à des températures comprises dans la plage de 20 à 65°C.

8. Procédé selon l'une des revendications 1 à 7, **caractérisé en ce qu'**on utilise en tant qu'émulsifiant (C) au moins un composé de formule générale 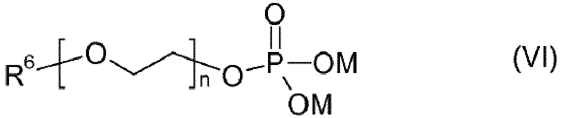 dans laquelle les variables sont définies comme suit :
les radicaux M sont identiques ou différents et sont choisis parmi l'atome d'hydrogène, les métaux alcalins, l'ammonium avec éventuellement un ou plusieurs résidus organiques,
n est un nombre compris dans la plage de 2 à 10,
R⁶ est choisi parmi les groupes alkyle en C₁₂-C₃₀ et alcényle en C₁₂-C₃₀ ayant une à trois doubles liaisons C-C.

9. Cuir fabriqué par un procédé selon l'une des revendications 1 à 8.

10. Formulation aqueuse, contenant
(A) au moins un copolymère organique amphiphile,
(B) au moins un composé siliconé, qui présente au moins un groupe acide carboxylique ou au moins un groupe anhydride carboxylique par molécule,
(C) au moins un composé tensioactif, choisi parmi les émulsifiants présentant au moins un atome de P par molécule,
(D) au moins un composé tensioactif choisi parmi les acides aminés N-acylés,
(E) au moins un composé tensioactif contenant au moins un résidu alkyle en C₁₀-C₃₀, à chaîne droite ou ramifiée, ou au moins un résidu de polyisobutène et au moins un groupe ionique ou ionisable en milieu aqueux, et qui est différent du copolymère amphiphile (A) et du composé tensioactif (C),
et qui est exempt de cires et d'huiles.

11. Formulation aqueuse selon la revendication 10, **caractérisée en ce que** le (co)polymère (E) a une masse moléculaire moyenne Mₙ comprise dans la plage de 500 à 5500 g/mol.

12. Formulation aqueuse selon la revendication 10 ou 11, **caractérisée en ce que** le (co)polymère (E) comprend un résidu polyisobutyle et un ou deux groupes acide carboxylique par molécule.

13. Formulation aqueuse selon l'une des revendications 10 à 12, **caractérisée en ce que** le copolymère organique amphiphile (A) peut être obtenu par copolymérisation des comonomères suivants :
(a) au moins un acide carboxylique en C₃-C₁₀ à insaturation éthylénique ou au moins un acide dicarboxylique en C₄-C₁₀ à insaturation éthylénique ou son anhydride,
(b) au moins un (méth)acrylate d'un alcool en C₃-C₁₀ à ramification a,
(c) au moins un (méth)acrylate d'un alcool primaire en C₄-C₂₀.

14. Formulation aqueuse selon l'une des revendications 10 à 13, **caractérisée en ce qu'**on choisit l'acide aminé N-acylé (D) parmi au moins un composé de formule générale (I) 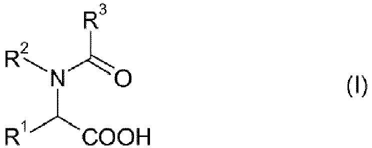 ou son sel d'un métal alcalin ou d'ammonium correspondant,
les variables étant définies comme suit dans la formule (I) :
R¹ est choisi parmi l'atome d'hydrogène, les groupes alkyle en C₁₋C₄ et aryle en C₆-C₁₄,
R² est choisi parmi l'atome d'hydrogène et les groupes alkyle en C₁-C₄,
CO-R³ est choisi parmi les résidus acyle qui dérivent d'acides gras à une ou plusieurs insaturations éthyléniques, ou saturés.

15. Formulation aqueuse selon l'une des revendications 10 à 14, **caractérisée en ce qu'**on utilise en tant qu'émulsifiant (C) au moins un composé de formule générale 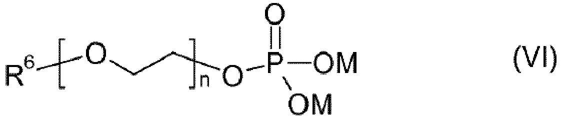 dans laquelle les variables sont définies comme suit :
les radicaux M sont identiques ou différents et sont choisis parmi l'atome d'hydrogène, les métaux alcalins, l'ammonium avec éventuellement un ou plusieurs résidus organiques,
n est un nombre compris dans la plage de 2 à 10,
R⁶ est choisi parmi les groupes alkyle en C₁₂-C₃₀ et alcényle en C₁₂-C₃₀ ayant une à trois doubles liaisons C-C.

16. Formulation aqueuse selon l'une des revendications 10 à 15, **caractérisée en ce que** le composé silicone (B) est choisi parmi les polysiloxanes qui contiennent des éléments structuraux de formules (II), (I-II) et en option (IV a) et (IV b) 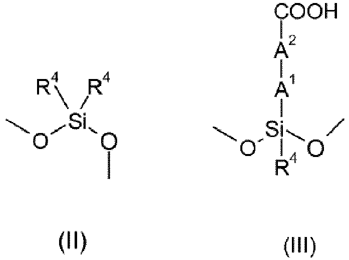
-Si(R⁴)₃ (IV a)
-OSi(R⁴)₃ (IV b)
dans lesquelles les variables sont définies comme suit :
les radicaux R⁴ sont identiques ou différents et sont choisis indépendamment l'un de l'autre parmi l'atome d'hydrogène, les groupes hydroxyle, alkyle en C₁-C₄, aryle en C₆-C₁₄, alcoxy en C₁-C₄, amino, mono(alkyle en C₁-C₄)amino, di(alkyle en C₁-C₄)amino ou A¹-A²-COOH,
A¹ représente une liaison directe, un atome d'oxygène ou un groupe amino, carbonyle, amido ou ester,
les groupes A² sont identiques ou différents et représentent chacun un groupe alkylène en C₅-C₂₅ à chaîne droite ou ramifiée.

17. Utilisation de formulations aqueuses selon l'une des revendications 10 à 16 en tant que bain aqueux, ou pour la fabrication de bains aqueux, destinés à la fabrication de cuir.
